# EUROPÄISCHE PATENTSCHRIFT

(11) **EP 3 719 537 B1**
(45) Veröffentlichungstag und Bekanntmachung des Hinweises auf die Patenterteilung: **17.03.2021**
(21) Anmeldenummer: 19167193.2
(22) Anmeldetag: 04.04.2019
(51) Int. Cl.: G01S 17/32

(54) **MESSEN VON ABSTÄNDEN**
MEASUREMENT OF DISTANCES
PROCÉDÉ DE MESURE DE DISTANCES

(43) Veröffentlichungstag der Anmeldung: 07.10.2020
(73) Patentinhaber: SICK AG, 79183 Waldkirch (DE)
(72) Erfinder: Tschuch, Dr. Sebastian, 79104 Freiburg (DE); Gimpel, Dr. Hartmut, 79194 Gundelfingen (DE)

(56) Entgegenhaltungen:
- EP-A2- 1 055 941
- CN-A- 105 629 258
- YANG FU ET AL: "Laser Altimeter Based on Random Code Phase Modulation and Heterodyne Detection", IEEE PHOTONICS TECHNOLOGY LETTERS, IEEE SERVICE CENTER, PISCATAWAY, NJ, US, Bd. 26, Nr. 23, 1. Dezember 2014 (2014-12-01), Seiten 2337-2340, XP011562945, ISSN: 1041-1135, DOI: 10.1109/LPT.2014.2356333 [gefunden am 2014-10-27]
- WU LONG ET AL: "Range resolution improvement of phase coded lidar system utilizing detector characteristics for short codes acquirement", VISUAL COMMUNICATIONS AND IMAGE PROCESSING; 20-1-2004 - 20-1-2004; SAN JOSE,, Bd. 9250, 13. Oktober 2014 (2014-10-13), Seiten 925008-925008, XP060041212, DOI: 10.1117/12.2067031 ISBN: 978-1-62841-730-2

## Beschreibung

Die Erfindung betrifft eine optoelektronische Vorrichtung und ein Verfahren zum Messen von Abständen zu einem Objekt in einem Überwachungsbereich nach dem Oberbegriff von Anspruch 1 beziehungsweise 14.

Es sind verschiedenste Arten bekannt, mit Licht Abstände zu messen, worunter hier die Lichtlaufzeitverfahren in ihren zahlreichen Spielarten betrachtet werden. Andere Verfahren wie Triangulation oder chromatisch-konfokale Abstandsmessung erreichen durchaus hohe Genauigkeiten, können aber in vielen Anwendungen eine Lichtlaufzeitmessung nicht einfach ersetzen.

Sehr etabliert sind inkohärente Verfahren zur Lichtlaufzeitmessung. Dabei wird dem Messlicht eine Intensitätsmodulation aufgeprägt, die empfangsseitig zeitlich lokalisiert wird. Unterschieden werden Pulsverfahren mit Pulsen typischerweise einer Dauer im Bereich einiger Nanosekunden entsprechend einer Modulationsfrequenz von bis zu einem GHz und Phasenverfahren, in denen eine periodische Modulation im Bereich einiger hundert MHz verwendet wird. Auf dieser Basis wird eine Messauflösung von einigen Millimetern erreicht, und das liegt nicht mehr fern der technisch erreichbaren Grenze von vielleicht 1/10 mm.

Die DE 10 2013 100 367 A1 geht von einer speziellen Form eines Pulsverfahrens aus, nämlich einem sogenannten Pulsmittelungsverfahren, bei dem nicht ein Einzelpuls, sondern eine Vielzahl schwächerer Pulse gemeinsam statistisch ausgewertet wird. Konkret erfolgt in diesem Fall die empfangsseitige Auswertung durch ein Optimalfilter (matched filter). Damit wird die Messgenauigkeit unter verrauschten Umgebungsbedingungen verbessert, aber die Auflösungsgrenze jedenfalls nicht mehr wesentlich verschoben.

In der EP 2 626 722 A1 wird der Sendelichtstrahl eines Laserscanners mit einer Pseudozufallsfolge moduliert und das zurückkehrende Licht mit dieser Pseudozufallsfolge korreliert. Das verbessert gegenüber einem Phasenverfahren die Störfestigkeit, nicht aber die Messgenauigkeit. In der noch unveröffentlichten deutschen Patentanmeldung mit dem Aktenzeichen 10 2018 108 340 werden mehrere Abtaststrahlen jeweils mit einer eigenen Pseudozufallsfolge codiert, um sie auseinanderzuhalten.

Grund für die begrenzte Messauflösung klassischer, inkohärenter Lichtlaufzeitverfahren ist letztlich die Abhängigkeit von der künstlichen, vergleichsweise geringen Modulationsfrequenz. Das lässt sich durch kohärente oder interferometrische Verfahren gewaltig steigern, in denen die Lichtfrequenz selbst genutzt wird, die mit einigen hundert THz viele Größenordnungen über einer künstlichen Modulationsfrequenz liegt. Beispielsweise in einem Michelson-Interferometer verlässt das Messlicht das Gerät in einem Arm und wird am Messobjekt reflektiert. In dem anderen Arm wird Referenzlicht direkt innerhalb des Geräts zum Detektor geleitet, wo es mit dem reflektierten Messlicht interferiert. Dadurch kann die Phasenverschiebung in Bruchteilen der Lichtwellenlänge bestimmt und so eine Messauflösung im Nanometer-Bereich erzielt werden.

Das wird aber durch den gewaltigen Nachteil eines winzigen Eindeutigkeitsbereichs erkauft, denn der Abstand ist durch den interferometrisch gemessenen Phasenversatz nur modulo der Lichtwellenlänge bekannt. Um einen Absolutwert auf größeren Skalen zu erhalten, müssen die Interferenzmaxima gezählt werden, und das ist nicht immer möglich und jedenfalls ein ungeheurer Aufwand.

Es soll noch erwähnt werden, dass bei einem kohärenten Messverfahren nur von dem Messobjekt zurückgestreutes Licht ausgewertet werden kann, das noch zum Sendebeziehungsweise Referenzlicht kohärent ist. Die Interferenzsignale sind daher sehr schwach, und die nötigen Sendeleistungen für in der optischen Abstandsmessung übliche Meter-Reichweiten sehr hoch, mit entsprechend teuren Lichtquellen. Bei sehr großen Abständen von mehreren 100 m wiederum hat das kohärente Verfahren sogar die bessere Energiebilanz, weil das kohärente Feld nur invers zum Abstand, die inkohärente Intensität jedoch invers zum Quadrat des Abstands abfällt.

Nach der bisherigen Diskussion besteht nur die Wahl zwischen einer vergleichsweise langsamen künstlichen Modulationsfrequenz mit begrenzter Messgenauigkeit und großem Eindeutigkeits- oder Messbereich der klassischen Lichtlaufzeitverfahren und der sehr hohen Lichtfrequenz mit höchster Messgenauigkeit, aber praktisch verschwindenden Eindeutigkeitsbereich der kohärenten Verfahren.

Im Stand der Technik sind verschiedene Ansätze bekannt, zwei unterschiedliche optische Abstandsmessverfahren zu kombinieren, von denen eines eine feinere Messauflösung und das andere einen größeren Eindeutigkeitsbereich beisteuert. In der noch unveröffentlichten europäischen Patentanmeldung mit dem Aktenzeichen 17197568 wird ein Pulsverfahren verwendet, um den Eindeutigkeitsbereich eines Phasenverfahrens zu verbessern. Die beiden beitragenden Lichtlaufzeitverfahren sind aber inkohärent, so dass die Messgenauigkeit längst nicht das erreicht, was in kohärenten Verfahren mit Auswertung der Lichtfrequenz möglich ist. Die US 5 889 490 A1 offenbart einen ähnlichen Ansatz mit Bursts von Sendepulsen, die doppelt anhand ihrer Hüllkurve ähnlich einem Pulsverfahren und anhand ihrer Phase lokalisiert werden. Ein weiterer ähnlicher Ansatz variiert, ähnlich wie in einem FMCW-Verfahren (Frequency-Modulated Continuous Wave), die künstliche Modulationsfrequenz in Chirps oder Frequenzrampen, was aber weiterhin nicht die Lichtfrequenz betrifft.

Soll in einer solchen Kombination tatsächlich die eigentliche Lichtfrequenz genutzt werden, so ist das bisher nur mit für übliche Lichtlaufzeitanwendungen nicht vertretbarem Aufwand möglich. Dabei wird beispielsweise eine Art optisches FMCW-Verfahren umgesetzt, in dem das Licht selbst einer zeitabhängigen Frequenzänderung unterzogen wird. Dadurch ist es gleichsam markiert, was durch Ausmessen der Schwebungsfrequenz nach der Interferenz rekonstruiert wird, und der Eindeutigkeitsbereich vergrößert sich auf das Zeitintervall der Frequenzänderung. Mit derartigen Ansätzen befassen sich WO 2018/189863 A1, US 2018/0356440 A1 oder US 2019/018139 A1. Andere Varianten erzeugen eine sinusförmige Frequenzmodulation wie in der US 2018/0283845 A1 oder nutzen wie in der US 8 687 173 B2 zwei Laserlichtquellen, die gegenläufig in ihrer Frequenz variiert werden.

Nachteilig hieran ist, dass ein abstimmbarer Laser benötigt wird, dessen Wellenlänge ausreichend schnell und verlässlich verstellbar ist und der entsprechend teuer und technisch aufwändig ist. Auch die Erzeugung der stabilen und schnellen Ansteuerung für die Frequenzmodulation bedeutet erheblichen elektronischen Aufwand.

Aus der EP 3 388 862 A1 ist ein Verfahren zur hochaufgelösten Entfernungsmessung mittels Interferometrie bekannt, bei dem die Referenzstrahlung relativ zur Messstrahlung frequenzverschoben ist. Der erforderliche kohärente Frequenzversatz lässt sich nur sehr aufwändig erzeugen.

Bekannt ist noch die Verwendung von Frequenzkämmen, etwa in Trocha, Philipp, et al. "Ultrafast optical ranging using microresonator soliton frequency combs." Science 359.6378 (2018): 887-891 oder Coddington, I., et al. "Rapid and precise absolute distance measurements at long range." Nature photonics 3.6 (2009): 351. Frequenzkämme sind aber ausgesprochen komplex und teuer.

Mit Pulsverfahren kann der Eindeutigkeitsbereich einer kohärenten Abstandsmessung nicht erweitert werden. Dabei würden Referenz- und Messpuls zeitversetzt auf den Detektor treffen, und folglich können sie nicht interferieren.

Aus der Telekommunikation ist die Phasenmodulation bekannt, um Daten auf ein Lichtsignal aufzumodulieren. Beispielsweise wird bei der binären Phasenumtastung ein Bit durch die Phasen 0° und 180° codiert, oder es werden bei der Quadratur-Phasenumtastung zwei Bit durch die Phasenwerte 0°, 90°, 180° und 270° übertragen. Man kennt aus der Signalverarbeitung auch Pseudozufallscodefolgen mit verschiedensten vorteilhaften Eigenschaften, die bei CDMA (code division multiple access) zum Einsatz kommen.

In der Telekommunikation werden zur GBit-Datenübertragung in Glasfasern Modulationsfrequenzen bis 100 GHz kommerziell verwendet. Entsprechend schnelle optoelektronische Bauteile etwa bei 1.550 nm Wellenlänge sind verfügbar, wie Phasenschieber als ein Teil in Interferometern zur schnellen Intensitätsmodulation der Datenlichtpulse mittels konstruktiver und destruktiver Interferenz. Auch Photodioden mit dieser Bandbreite sowie Single-Mode-Laserdioden mit ca. 100mW cw-Leistung sind erhältlich.

Das alles betrifft aber die Telekommunikation und nicht die optische Abstandsmessung und ist für die Lösung der hier diskutierten Probleme nicht gedacht und auch nicht unmittelbar geeignet.

Aus der Arbeit von Yang, Fu, et al. "Laser altimeter based on random code phase modulation and heterodyne detection." IEEE Photonics Technology Letters 26.23 (2014), Seiten 2337-2340 ist eine laserbasierte Entfernungsmessung bekannt. Das Sendelicht wird in Mess- und Referenzlicht aufgeteilt und dem Messlicht durch binäre Phasencodierung ein Zufallscode aufgeprägt. Das aus dem Messbereich zurückkehrende Messlicht interferiert mit dem Referenzlicht, das Mischsignal wird in einem Photodetektor erfasst und anschließend mit dem bekannten Zufallscode verglichen, um die Lichtlaufzeit zu bestimmen. In der EP 1 055 941 A2 und der CN 105 629 258 A sind vergleichbare Vorrichtungen beschrieben.

Es ist daher Aufgabe der Erfindung, ein genaueres und alltagstaugliches optisches Abstandsmessverfahren anzugeben.

Diese Aufgabe wird durch eine optoelektronische Vorrichtung und ein Verfahren zum Messen von Abständen zu einem Objekt in einem Überwachungsbereich nach Anspruch 1 beziehungsweise 14 gelöst. Ein Lichtsender sendet kohärentes Sendelicht in den Überwachungsbereich zu den zu vermessenden Objekten. Umgekehrt wird mit einem Lichtempfänger aus dem Überwachungsbereich kommendes Empfangslicht detektiert, das eine Überlagerung aus Umgebungslicht und Anteilen des an den Objekten reflektierten oder gestreuten Sendelichts ist. Mit Hilfe einer Steuer- und Auswertungseinheit wird eine Codefolge auf das Sendelicht aufmoduliert. Bei der Auswertung wird der Zeitversatz der Codefolge im Empfangslicht durch Vergleich mit der bekannten Codefolge als Referenz bestimmt, insbesondere durch ein Korrelationsverfahren beziehungsweise ein Optimalfilter (matched filter). Dieser Zeitversatz entspricht der Lichtlaufzeit und damit dem gesuchten Abstandswert. Dem Sendelicht wird zusätzlich zu der Codefolge eine Phasenrampe aufmoduliert.

Die Erfindung geht von dem Grundgedanken aus, die Lichtlaufzeit anhand der Trägerfrequenz des Lichts selbst mittels optischer Interferenz zu messen. Ausgangspunkt ist ein Korrelationsverfahren mit Codefolgen, jedoch mit drei fundamentalen Unterschieden: die Codefolge wird der Lichtwelle selbst und als Phasenmodulation aufgeprägt, und es wird in interferometrischer Anordnung gemessen. Statt einer künstlichen Amplitudenmodulation mit Auswertung der Einhüllenden dieser Intensitätsmodulation wird demnach die Trägerwelle des Lichts genutzt. Eine Amplitudenmodulation wäre mit hohen Frequenzen technisch schwer umzusetzen, und das wird durch Verwendung eines Phasencodes überwunden. Für eine interferometrische Messung wird ein Teil des Sendelichts als Referenzlicht auf direktem Weg, also innerhalb der Vorrichtung und ohne Messlichtweg durch den Überwachungsbereich, zum Lichtempfänger geführt. Dort interferieren Referenzlicht und Empfangslicht, d .h. es ist eine optische Interferenz, und der Lichtempfänger detektiert das entstehende Interferenzsignal. Das Referenzlicht wird vorzugsweise als Teil des noch unmodulierten Sendelichts abgezweigt. Empfangsseitig wird zudem vorzugsweise die zur Modulation verwendete Codefolge elektronisch zur Verfügung gestellt. In einem herkömmlichen Korrelationsverfahren würde die bekannte Codefolge auch auf elektronischem Weg als Referenz zugeführt, aber das bliebe die einzige Referenz, dort findet keine optische Interferenz statt.

Die Erfindung hat den Vorteil, dass eine besonders hohe Messgenauigkeit von 10 µm und besser erreichbar ist, mehrere Größenordnungen besser als bei inkohärenten Lichtlaufzeitverfahren. Es ist eine absolute Abstandsmessung mit gegenüber herkömmlichen kohärenten Messverfahren deutlich vergrößertem Eindeutigkeitsbereich und erlaubt vergleichsweise große Messbereiche von zumindest 100 mm. Zusatzmaßnahmen wie das Zählen von Interferenzmaxima sind dafür nicht nötig. Die Fremdlichtfestigkeit der Abstandsmessung ist extrem gut, weil nur das mit dem Sendelicht kohärente Empfangslicht erfasst wird. Dabei ist eine technische Umsetzung mit günstigen, beispielsweise aus der Telekommunikation kommerziell verfügbaren Bauteilen möglich.

Der Lichtsender weist bevorzugt eine nicht abstimmbare Laserlichtquelle für Sendelicht einer Wellenlänge auf. Es genügt ein einfacher cw-Laser ohne Wellenlängenverstellung (nicht abstimmbar, non-tunable), mit nur einer Wellenlänge, d. h. es ist kein Frequenzkamm, und ohne die Möglichkeit einer schnellen Intensitätsveränderung. Eine bei Lasern immer mögliche unpräzise Veränderung der Wellenlänge beispielsweise durch Temperaturmanipulation wird hier nicht als abstimmbar aufgefasst. Abstimmbar wären in diesem Sinne nur Laserlichtquellen, die genau kontrollierte Einstellungen veränderter Wellenlängen erlauben, und insbesondere auch über einen gewissen Bereich von beispielsweise mindestens 1% der Zentralwellenlänge und ohne Sprünge. Lediglich bei größeren Reichweiten oberhalb von 10 m könnte ein etwas hochwertigerer Laser erforderlich sein, um eine ausreichende Kohärenzlänge zumindest über den Lichtweg hin und zurück bis zur maximalen Reichweite sicherzustellen. Außerdem ist der Laser vorzugsweise transversal eindmodig. Beispielsweise für 100 mm Messbereich reicht eine single-mode Halbleiter-Laserdiode im cw-Betriebsmodus mit Leistungen im Bereich von 100 mW aus.

Die Steuer- und Auswertungseinheit ist bevorzugt dafür ausgebildet, Codebits der Codefolge mit einer Frequenz von mindestens 10 GHz auf das Sendelicht aufzumodulieren. Die Frequenz kann auch mehrere 10 GHz oder mindestens 100 GHz betragen. Derart schnelle Bauteile, wie ein Phasenschieber, sind aus der optischen Datenübertragung verfügbar. Dort werden sie verwendet, um die zu übertragenden Daten aufzumodulieren und an der Empfangsstelle zu decodieren. In einer optischen Abstandsmessung dagegen wird die Codefolge von der Vorrichtung letztlich nach Remission an dem Objekt an sich selbst geschickt, wo sie bereits bekannt ist und dieses Wissen genutzt wird, um den Zeitversatz entsprechend dem Lichtweg zu bestimmen.

Also Codefolge wird vorzugsweise eine Pseudozufallscodefolge eingesetzt, und zwar nochmals bevorzugt derart, dass sie einen schmalen Mehrdeutigkeitsbereich hat beziehungsweise deren Autokorrelationsfunktion ein einziges Maximum und nur möglichst kleine Nebenmaxima erzeugt, um die richtige zeitliche Lage möglichst genau und eindeutig bestimmen zu können. Bei konventioneller, inkohärenter Lichtlaufzeitmessung mit Amplitudenmodulation sind Codes aus vielen Einzelkomponenten nicht vorteilhaft, weil sich die verfügbare Sendeleistung auf viele Pulse verteilt und dies das Signal-Rausch-Verhältnis beeinträchtigt. Bei dem erfindungsgemäßen kohärenten Interferenzverfahren, das feldstärkebasiert misst, gibt es solche Einbußen nicht. Es ist vorteilhaft, wenn die Codefolge gleich viele Einsen wie Nullen aufweist. Damit wird bei einer 1-Bit-Abtastung und binärer Phasencodierung der Mittenpegel auf den Mittelwert der beiden aufmodulierten Phasen festgelegt. Die Schwelle für die Abtastung kann über einen Tiefpassfilter so eingestellt werden, dass zum einen alle Phasenwechsel des Pulscodes die Schwelle kreuzen und zum anderen langsame Phasenänderungen aus der Umgebung kompensiert werden.

Die Steuer- und Auswertungseinheit ist bevorzugt dafür ausgebildet, für eine Verfeinerung der Bestimmung der Lichtlaufzeit die Phasenverschiebung der Lichtwelle zwischen Sendelicht beziehungsweise Referenzlicht und Empfangslicht zu bestimmen. In dieser Ausführungsform wird die Messgenauigkeit weiter verbessert, indem die Phasenlage des Empfangslichts gegenüber dem Referenzlicht in der Größenordnung der Lichtwellenlänge oder Bruchteilen davon bestimmt wird. Man kann nicht davon sprechen, dass die allein codebasierte erfindungsgemäße Messung eine Grobmessung wäre, da sie bereits Messgenauigkeiten von weniger als 10 µm ermöglicht. Dennoch ist eine kohärente Phasenmessung mit einer Genauigkeit von Bruchteilen der Wellenlänge und damit im Nanometer-Bereich nochmals ungleich feiner. Die Phase kann jeweils schon pro Codeelement und damit über den Code hinweg vielfach gemessen und gemittelt werden. Der an sich kleine Eindeutigkeitsbereich einer Lichtwellenlänge wird durch die codebasierte Messung auf deren vergleichsweise großen Eindeutigkeitsbereich erweitert.

Dem Lichtempfänger ist bevorzugt ein Mehrbit-AD-Wandler mit einer Abtastfrequenz von mindestens 10 GHz nachgeordnet, um das Interferenzsignal hochaufgelöst abzutasten. Wegen des Nyquist-Kriteriums sollte die Abtastfrequenz vorteilhafterweise höher, insbesondere doppelt so hoch sein wie die Frequenz, mit der Codebits aufmoduliert werden. Es werden später verschiedene Ausführungsformen vorgestellt, mit denen ein solcher relativ aufwändiger schneller Mehrbit-AD-Wandler vermieden werden kann, jedenfalls soweit es um die Bestimmung der Lichtlaufzeit aus der aufmodulierten Codefolge geht. Für die feine Phasenbestimmung bezüglich der Lichtwellenlänge ist jedoch eine hochaufgelöste Erfassung des Interferenzsignals eine einfache Möglichkeit der Umsetzung.

Die Steuer- und Auswertungseinheit ist bevorzugt dafür ausgebildet, die Codefolge durch zwei oder mehr Phasenzustände, insbesondere vier Phasenzustände auf das Sendelicht aufzumodulieren. Eine binäre Phasencodierung mit zwei Zuständen, beispielsweise 0° und 180°, ist besonders einfach umzusetzen. Mit zusätzlichen Phasen, etwa den vier Phasen 0°, 90°, 180° und 270° wie bei einer Quadratur-Phasenumtastung, ist insbesondere die empfangsseitige Unterscheidung erleichtert, wie später noch diskutiert. Andere Anzahlen und Abstände der Phasenzustände sind auch vorstellbar.

Der Lichtempfänger weist bevorzugt mehrere Lichtempfangselemente auf, an denen jeweils ein Interferenzsignal aus Empfangslicht und Referenzlicht erzeugt und detektiert wird, wobei ein Phasenverschiebeelement im Strahlengang von Empfangslicht und/oder Referenzlicht mindestens eines Lichtempfangselements angeordnet ist. Bei diesen Ausführungsformen werden mehrere Empfangskanäle mit gegenseitigem Phasenversatz eingesetzt, um die Codefolge im Empfangslicht auch bei ungünstigen Phasenlagen noch zu erfassen. Der gegenseitige Phasenversatz der Empfangskanäle lässt sich durch entsprechende Verzögerung im Lichtweg des Referenzlichts und/oder des Empfangslichts erzeugen, beispielsweise eine relative Verschiebung um ein Viertel der Lichtwellenlänge für 90° Phasenversatz. Auch das reflektierte und transmittierte Signal eines Strahlteilers hat einen solchen gegenseitigen Phasenversatz, womit die Aufteilung des jeweiligen Lichts auf mehrere Empfangskanäle und der Phasenversatz in einem erzeugt werden können. Damit der richtige Phasenversatz zwischen den Empfangskanälen eingestellt werden kann, beispielsweise im Rahmen einer Kalibrierung oder während der Endfertigung, kann es vorteilhaft sein, ein durchstimmbares Phasenverschiebeelement zu verwenden.

In einer besonders bevorzugten Ausführungsform weist der Lichtempfänger nur ein Lichtempfangselement auf. Das erleichtert den Aufbau der Vorrichtung. Vorzugsweise wird dies in Kombination mit einer etwas aufwändigeren Phasencodierung mit nicht nur zwei, sondern beispielsweise vier Phasenzuständen kombiniert. Insbesondere kann der Code einmal in der Codierung 0°, 180° und dann ein weiteres Mal in der Codierung 90°, 270° ausgesandt werden. Damit wird das Lichtempfangselement jedenfalls einmal mit günstiger relativere Phasenausrichtung detektiert. In diesem Sinne können demnach Komplexität der Phasencodierung auf der Sendeseite, Messzeit und Aufwand für mehrere Empfangskanäle gegeneinander getauscht werden. Dabei ist ausdrücklich zugelassen, mehrere Phasencodierungen und mehrere Empfangskanäle gleichzeitig vorzusehen, beispielsweise vier Phasen und vier oder auch nur zwei gegeneinander phasenversetzte Empfangskanäle. Das ist in gewisser Weise überbestimmt, erzeugt aber zusätzliche Messinformation beziehungsweise kürzere Messzeiten.

Dem Lichtempfänger ist bevorzugt ein Binarisierer nachgeordnet, um das Interferenzsignal oder eine Kombination von Interferenzsignalen in eine Bitfolge für den Vergleich mit der Codefolge zu wandeln. Eine 1-Bit-Information genügt für die Rekonstruktion der Codefolge und deren Vergleich oder Korrelation mit der bekannten Codefolge, die für die Modulation des Sendelichts verwendet wird. Ein Binarisierer hoher Frequenz ist wesentlich günstiger zu realisieren als ein Mehrbitwandler. Im Falle mehrerer Empfangskanäle sind vorzugsweise mehrere oder ebenso viele Binarisierer vorgesehen, die dann nur zwischen extremen Phasenzuständen wie 0° und 180° und dann im Zusammenspiel der Empfangskanäle auch mehr Phasenzuständen wie den Quadranten 0°, 90°, 180° und 270° unterscheiden müssen. In einer bevorzugten Ausführungsform werden die Empfangskanäle noch untereinander verglichen, um nur ein kanalübergreifendes Ausgangsbit pro Zeiteinheit zu erzeugen. Beispielsweise detektiert ein Empfangskanal mit 90° Phasenverschiebung gegenüber dem anderen, und es wird ein Bit ausgegeben, das anzeigt, in welchen der beiden Kanäle jeweils das größere Interferenzsignal detektiert wird. Ungeachtet der bevorzugten Verwendung von Binarisieren ist weiterhin denkbar, zumindest in einem Empfangskanal mit mehreren Bit und hoher Frequenz abzutasten, um die genaue Phasenlage für eine Verfeinerung der auf der Codefolge basierenden Lichtlaufzeitmessung bis auf Bruchteile der Lichtwellenlänge zu ermöglichen.

Die Steuer- und Auswertungseinheit ist erfindungsgemäß dafür ausgebildet, dem Sendelicht zusätzlich zu der Codefolge eine Phasenrampe aufzumodulieren. Dazu werden beispielsweise zwei Phasenschieber verwendet, von denen einer die Codefolge und der andere die Phasenrampe erzeugt, oder ein komplexer Phasenschieber ist zu beidem zugleich in der Lage. Die Phasenrampe ist vorzugsweise linear ansteigend, auch stückweise nach Art eines Sägezahns, oder eine Stufenfunktion.

Die Steuer- und Auswertungseinheit ist bevorzugt dafür ausgebildet, innerhalb einer Messung eine Codefolge wiederholt aufzumodulieren. Das sind dann gleichsam Messwiederholungen, die statistisch ausgewertet werden können. Bevorzugt ist den Messwiederholungen die genannte Phasenrampe unterlegt. Es ist auch denkbar, in einer Messung nacheinander verschiedene, vorzugsweise zueinander orthogonale Codes zu verwenden. Damit wird der Messbereich auf mehrere Teilintervalle und Codes aufgeteilt, so dass insgesamt ein noch größerer Eindeutigkeitsbereich entsteht, ohne dass mit hohem Aufwand sehr lange Codefolgen miteinander korreliert werden müssen.

Die Steuer- und Auswertungseinheit ist bevorzugt dafür ausgebildet, aus den jeweils wiederholt ausgesandten und wieder empfangenen Codefolgen mehrere Korrelationssignale zu bestimmen, darin mittels Fourieranalyse anhand der Frequenzeigenschaften der Phasenrampe ein Korrelationsmaximum aufzufinden und dessen zeitliche Lage innerhalb des Korrelationssignals sowie die zugehörige Phase zu bestimmen. Durch die unterlegte Phasenrampe wird jede wiederholt ausgesandte Codefolge zu einer unterschiedlich ausgeprägten Interferenz führen. Das jeweilige Korrelationssignal zu den einzelnen Codefolgen und insbesondere das Korrelationsmaximum schwingt daher in seiner Amplitude entsprechend der Phasenrampe. Durch Fourieranalyse vorzugsweise unter Ausnutzung der Kenntnis der Frequenz, mit der die Phasenrampe abläuft, als zusätzliches Filter, lässt sich die zeitliche Lage des Korrelationsmaximums und sogar dessen genaue Phasenlage in Bruchteilen der Lichtwellenlänge bestimmen. Auf diese Weise wird eine hochauflösende Mehrbitabtastung verzichtbar.

Die Steuer- und Auswertungseinheit ist bevorzugt dafür ausgebildet, das aus dem Interferenzsignal erzeugte Empfangssignal differentiell auf Phasensprünge auszuwerten. In realen Messumgebungen, gerade bei mobilen Messanwendung oder scannenden Verfahren, ist die Bedingung über die Messzeit stabiler Bedingungen nicht unbedingt gegeben. Dadurch kommt es zu zusätzlichen Phasenverschiebungen, die sich dem Phasencode und dem interferometrisch zu messenden Phasenversatz überlagern. Wegen der extrem feinen Messauflösung genügen dafür winzigste Variationen. Bei solchen dynamischen Phasenvariationen bleibt der Phasensprung als solcher, also das plötzliche Umschlagen beispielsweise von 0° auf 180°, weiterhin erkennbar, und deshalb kann ein differentielles Verfahren vorteilhaft sein, das nur die Lage von Phasensprüngen berücksichtigt.

Der Lichtempfänger weist bevorzugt mehrere Lichtempfangselemente auf, an denen jeweils ein Interferenzsignal aus Empfangslicht und Referenzlicht erzeugt und detektiert wird, wobei ein Phasenverschiebeelement im Strahlengang von Empfangslicht und/oder Referenzlicht mindestens eines Lichtempfangselements angeordnet ist und wobei die Steuer- und Auswertungseinheit dafür ausgebildet ist, einen Phasensprung dann zu erkennen, wenn mehrere Lichtempfangselemente zugleich einen Sprung in der Intensität ihres Interferenzsignals erfassen. Das ist eine bevorzugte Ausführungsform, um Phasensprünge mit einfachen Mitteln zu erfassen. Es gibt wie auch schon in oben vorgestellten Ausführungsformen mehrere Empfangskanäle mit gegenseitigem Phasenversatz. Damit wird aber nun nicht versucht, die Phase selbst zu messen oder entsprechend der Codierung zu klassifizieren, sondern es wird nur detektiert, ob es Phasensprünge gibt. Das ist dann der Fall, wenn die Interferenz in bei Detektion in mehrfachem gegenseitigem Phasenversatz zugleich von konstruktiv auf destruktiv umschlägt oder umgekehrt. Gleichzeitig ist natürlich auf die kleinste erfassbare Zeit der Empfangskanäle begrenzt. Es sind verschiedene Kriterien denkbar, wie groß die Anzahl von m umschlagenden aus n Empfangskanälen sein muss.

Im Strahlengang des Referenzlichts und/oder Empfangslichts ist bevorzugt ein insbesondere schaltbares polarisationsoptisches Bauelement, z. B. eine schaltbare Halb- oder Viertelwellenplatte angeordnet. Damit kann für das Referenzlicht und/oder das Empfangslicht zumindest zeitweise die Polarisation verändert werden, z. B. die Polarisationsebene von linear polarisiertem Licht gedreht werden. Andernfalls könnte es dazu kommen, dass wegen ungünstiger Oberflächeneigenschaften des angetasteten Objekts Referenz- und Empfangslicht ausgerechnet zueinander senkrecht polarisiert sind und nicht interferieren können. Durch die zeitweise Polarisationsänderung wird das zumindest für einen Teil der Messdauer ausgeschlossen. Alternativ wird in einem Empfangskanal die Polarisation verändert und in einem anderen nicht, dann muss das polarisationsoptische Bauteil auch nicht schaltbar sein.

Die Steuer- und Auswertungseinheit ist bevorzugt dafür ausgebildet, zeitweise kein Sendelicht in den Überwachungsbereich auszusenden und nur das Interferenzsignal auszuwerten. Das dient dazu, Kantentreffer oder mehrere hintereinander im Sendelichtstrahl angeordnete Objekte besser aufzulösen. Während kein Sendelicht ausgesandt wird, kann auch schwächeres Empfangslicht von einem ferneren Objekt ohne Überlagerung mit dem stärkeren Empfangslicht von einem näheren Objekt detektiert und ausgewertet werden. Auch während kein Sendelicht ausgesandt wird, sollte der Lichtsender weiterhin Referenzlicht erzeugen, um eine Interferenz zu ermöglichen. Es wird also beispielsweise der Strahlengang nach außen blockiert statt der Lichtsender ausgeschaltet.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer optoelektronischen Vorrichtung für eine optische Abstandsmessung;
- Fig. 2: eine Darstellung ähnlich Figur 1, jedoch mit getrenntem Sende- und Empfangslichtweg statt koaxialem Aufbau;
- Fig. 3: eine schematische Darstellung zweier Empfangskanäle mit gegenseitigem Phasenversatz zur Decodierung eines Phasencodes des Empfangslichts;
- Fig. 4: eine Darstellung einer alternativen Ausgestaltung zweier Empfangskanäle, wobei nun der Phasenversatz dem Empfangslicht statt dem Referenzlicht aufgeprägt wird;
- Fig. 5: eine erläuternde Darstellung zur Kombination der Signale zweier Empfangskanäle;
- Fig. 6: eine erläuternde Darstellung zu Bestimmung eines Quadranten bei einer Phasencodierung mit vier Phasen;
- Fig. 7: eine Darstellung der Modulation von Sendelicht zur Erzeugung eines Phasencodes mit überlagerter Phasenrampe;
- Fig. 8: beispielhafte Korrelationsverläufe bei wiederholter Messung mit einer Codefolge und überlagerter Phasenrampe;
- Fig. 9a: eine schematische Darstellung eines Kantentreffers;
- Fig. 9b: ein Phasendiagramm zur Erläuterung der schlechten Erkennbarkeit der von dem ferneren Objekt erzeugten Phasenverschiebung bei einem Kantentreffer;
- Fig. 10: beispielhafte Signalverläufe von einem nahen und fernen Ziel bei Kantentreffer zum Vergleich in einer 1-Bit-Abtastung und einer 8-Bit-Abtastung; und
- Fig. 11: eine Darstellung des Sendecodes bei einer Sendeunterbrechung, um Licht von einem ferneren Ziel zu erfassen.

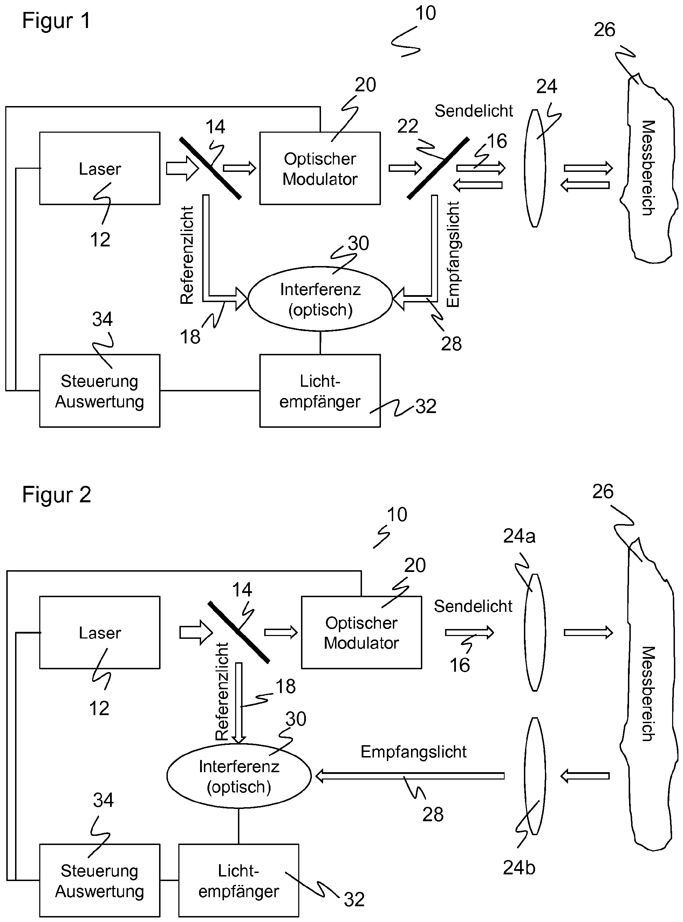

Figur 1 zeigt den Aufbau einer optoelektronischen Vorrichtung 10 für ein optisches Abstandsmessverfahren in einer Blockdarstellung. Die Vorrichtung 10 weist einen Lichtsender mit einem Laser 12 auf, der kohärentes Licht einer Lichtwellenlänge erzeugt, beispielsweise eine single-mode-cw-Laserdiode mit einer Leistung von 100 mW. Das erzeugte Licht wird an einem Teilerspiegel 14 oder dergleichen in Sendelicht 16 und Referenzlicht 18 aufgeteilt. Das Referenzlicht 18 wird direkt, d. h. innerhalb der Vorrichtung 10 zur Empfangsseite geleitet.

Ein optischer Modulator 20 prägt dem Sendelicht 16 durch Phasenmodulation eine Codefolge auf. Beispielsweise weist der optische Modulator 20 einen Phasenschieber auf. Der Phasenschieber kann ein pin-Phasenschieber aus einem Halbleiter-Wellenleiter sein. Dessen effektiver Brechungsindex wird durch einen eingebrachten elektrischen Strom schnell variiert und dadurch eine Phasencodierung mit einer Frequenz von mindestens 10 GHz oder sogar mindestens 100 Ghz erzeugt. Entsprechende Bauteile sind aus der Glasfaser-Telekommunikation bekannt. Eine denkbare Alternative ist ein thermischer Phasenschieber, dessen Temperatur mit einem winzigen Heizelement variiert wird, wodurch sich die thermische Ausdehnung und damit die Phase des transmittierten Sendelichts 16 ändert. Es ist wichtig zu betonen, dass die Lichtwellenfelder selbst in der Lichtfrequenz moduliert werden, nicht eine künstliche überlagerte Amplitudenmodulation in deren Intensität, also dem Betragsquadrat des Lichtfelds. Die Trägerfrequenz ist die Lichtfrequenz von einigen hundert THz, nicht eine künstliche Modulationsfrequenz von nur einigen hundert MHz. Dazu ist der Wechsel auf die beschriebene Phasenmodulation von der sonst bei Lichtlaufzeitverfahren üblichen Amplitudenmodulation von Vorteil, da dies bei gleichem Aufwand wesentlich schneller möglich ist.

Als Codefolge kommen insbesondere Pseudozufallscodefolgen oder auf ihre Korrelationseigenschaften hin optimierte Codefolgen in Betracht, wie Barker- oder Williard-Codes. Eine erreichbare vorteilhafte Eigenschaft solcher Codes ist, dass sie ein einziges scharfes Autokorrelationsmaximum aufweisen und mit weiteren derart konstruierten Codes nicht korrelieren. Es ist aber auch denkbar, die Breite der Autokorrelation dieser Codes absichtlich etwas breiter einzustellen, wobei jedoch weiterhin Nebenmaxima möglichst weitgehend unterdrückt bleiben, und so gleichsam einen künstlichen Jitter einzuführen. Das ermöglicht, die zeitliche Lage des Maximums durch versetzte Abtastung subpixelgenau zu bestimmen, was mit einem idealen Delta-Peak nicht möglich wäre.

Ein weiterer Teilerspiegel 22 ist dem optischen Modulator 20 nachgeordnet, um in einem koaxialen Aufbau den Sende- und Empfangspfad zu trennen. Dadurch ist es möglich, eine gemeinsame Sende- und Empfangsoptik 24 einzusetzen. Das Sendelicht 16 mit der durch Phasenmodulation aufgeprägten Codefolge wird in einen Überwachungsbereich oder Messbereich 26 ausgesandt, dort an einem Objekt remittiert oder reflektiert und kehrt als Empfangslicht 28 zurück zu der Sende- und Empfangsoptik 24. Die gemeinsame Sende- und Empfangsoptik 24 erleichtert es, Lichtanteile zu empfangen, die noch kohärent zu dem Sendelicht 16 sind.

Das Empfangslicht 28 wird in einen Interferenzbereich 30 geleitet, wo es mit dem zuvor ausgekoppelten und intern hierhergeführten Referenzlicht 18 optisch interferiert. Ein Lichtempfänger 32 erzeugt ein entsprechendes elektrisches Interferenzsignal. Dabei ist denkbar, für die Lichtinterferenz ein separates Bauteil vorzusehen wie in Figur 1 angedeutet. Alternativ findet die Interferenz direkt auf dem Lichtempfänger 32 statt, wo Referenzlicht 18 und Empfangslicht 28 dann geeignet überlagert werden.

Aus den Signalen des Lichtempfängers 32 wird auf eine später noch in verschiedenen Ausführungsformen erläuterte Weise die in dem Empfangslicht enthaltene Codefolge demoduliert. Diese empfangene Codefolge wird in einer Steuer- und Auswertungseinheit 34, die auch den optischen Modulator 20 steuert, mit der bekannten, beim Senden für die Phasenmodulation verwendeten Codefolge korreliert. Beispielsweise wird dafür ein Optimalfilter (matched filter) verwendet. Dadurch wird der zeitliche Versatz zwischen der ausgesandten und der wieder empfangenen Codefolge und damit ein Maß für die Lichtlaufzeit gewonnen, das in einen Abstand umgerechnet werden kann. Hierbei sind Messgenauigkeiten von etwa 10 µm erreichbar. Die Steuer- und Auswertungseinheit 34 führt die Korrelation vorzugsweise digital durch und weist dementsprechend mindestens einen digitalen Baustein auf, wie ein FPGA, ein ASCI oder einen Mikroprozessor.

Damit ist der Grundaufbau der Vorrichtung 10 derjenige eines Interferometers. Das kohärente Licht des Lasers 12 wird in Referenzlicht 18 und Sendelicht 16 aufgeteilt, wobei in einem Arm des Interferometers das Sendelicht 16 als Messlicht zum Objekt ausgesandt und in einem anderen Arm das Referenzlicht 18 im Gerät verbleibt. Die beiden Lichtstrahlen interferieren dann am Lichtempfänger 32. Die Lichtlaufzeit wird aus dem Zeitversatz der aufgeprägten Codierung gemessen. Das ergibt ein interferometrisches oder kohärentes LIDAR mit Phasencodierung.

Obwohl damit bereits eine um Größenordnungen bessere Messauflösung erreicht ist als bei herkömmlichen Lichtlaufzeitverfahren, kann dies durch zusätzliche kohärente Phasenmessung noch wesentlich verfeinert werden. Vorzugsweise wird für die nun vorgeschlagene vorteilhafte Weiterbildung mit der beschriebenen Messung bereits eine Messgenauigkeit unterhalb der Lichtwellenlänge erreicht. Das dient dann letztlich nur noch dazu, den Eindeutigkeitsbereich der zusätzlichen Phasenmessung zu erweitern.

Phasenmessung bedeutet, dass während der einzelnen Code-Bits, die innerhalb der Phasencodierung beispielsweise alle 10 ps entsprechend einer Phasenmodulation bei 100 Ghz wechseln, die Phase des Lichts zwischen Referenzlicht 18 und Empfangslicht 28 gemessen wird. Dazu wird beispielsweise das Interferenzsignal des Lichtempfängers 32 mit hoher Abtastrate und mehreren Bits abgetastet. Es handelt sich demnach um eine kohärente Phasendetektion für einen in Bruchteilen der Lichtwellenlänge gemessenen Abstand im Nanometerbereich. Durch Kombination des codebasierten Korrelationsverfahrens und der kohärenten Phasenmessung werden gleichzeitig ein großer Eindeutigkeitsbereich und eine hohe Messgenauigkeit erreicht.

Der optische Strahlengang ist in der schematischen Darstellung der Figur 1 nicht konkretisiert. Es sind Freistrahl, optische Wellenleiter beziehungsweise Glasfasern und gemischte Konzepte denkbar.

Die Vorrichtung 10 kann als Displacement-Sensor zur Bauteilkontrolle eingesetzt werden, aber es sind zahlreiche andere Bauformen und Anwendungen denkbar. Ein Displacement-Sensor wäre ein Beispiel für ein einstrahliges System mit nur einem stehenden Messstrahl. Der Messstrahl kann aber auch mit allen an sich bekannten Mitteln bewegt werden, wie in einem Laserscanner, sei es durch drehenden oder schwenkenden Messkopf, Drehspiegel, Facettenspiegelrad, drehende Prismen, Voice-Coil-Aktoren, Optical Phased Arrays, MEMS-Spiegel, Flüssigkristall-Strahlablenker und dergleichen. Hier wäre ein Bewegungsmuster vorzuziehen, das den Messstrahl während einer Messung auf einem Messpunkt festhält und dann erst zum nächsten Messpunkt springt, damit möglichst stationäre Messbedingungen vorliegen und sich nicht durch die Dynamik der Messung zusätzliche Phasenänderungen ergeben. Dazu könnte eine Mikroaktorik in einem Laserscanner den Messstrahl sägezahnartig in Gegenrichtung der Scanbewegung führen, oder es wird die Messrichtung gar nicht kontinuierlich, sondern sprunghaft verändert, etwa mittels eines Optical Phases Array. Sowohl stehende als auch bewegliche Systeme können mehrere statt nur einen Messstrahl nutzen.

Figur 2 zeigt nochmals eine Blockdarstellung einer Ausführungsform der optoelektronischen Vorrichtung 10. Im Unterschied zu Figur 1 sind hier der Sende- und Empfangsstrahlengang getrennt. Es ist also kein koaxialer Aufbau mehr, der eine gemeinsame Sende- und Empfangsoptik verwendet, sondern es gibt eine separate Sendeoptik 24a und Empfangsoptik 24b. Bei der Auslegung der Empfangsoptik 24b ist darauf zu achten, dass möglichst nur eine Transversalmode des vom Objekt zurücklaufenden Lichts 12 empfangen wird, da sonst die Kohärenz verlorengeht und zusätzlich inkohärentes Licht den Lichtdetektor stark beleuchtet, das nicht zum gewünschten Messsignal beiträgt. Die Ausführungsform der Figur 2 soll nur die Bandbreite der möglichen Bauformen der optoelektronischen Vorrichtung 10 untermauern. Es sind viele weitere Ausführungsformen denkbar, beispielsweise mit anderen Optiken oder einem Zirkulator statt dem Teilerspiegel 22.

Eine Herausforderung auf der Empfangsseite der Vorrichtung 10 ist die Rekonstruktion der in dem Empfangslicht 28 phasenmodulierten Codefolge mit möglichst einfachen technischen Mitteln. Dafür sind verschiedene Modulations- und Demodulationsschemata möglich, von denen nun einige vorgestellt werden. Zu bedenken ist dabei, dass die absolute Lichtfeldphase des Referenzlichts 18 aus praktischen Gründen nicht bekannt sein beziehungsweise in kurzen Zeitskalen spätestens von Sekunden schwanken wird. Daher muss die Messung ohne diese Absolutinformation auskommen.

Dem Sendelicht 16 können mit Hilfe des optischen Modulators 20 verschiedene Phasenmodulationen aufgeprägt werden. Bei einer binären Phasenmodulation werden nur zwei vorzugsweise maximal unterschiedliche Phasen wie 0° und 180° verwendet. Die Modulationsfrequenz ist möglichst schnell, da dies die Messgenauigkeit verbessert. Mit heutigen Komponenten sind zumindest einige 10 GHz oder auch mindestens 100 GHz erreichbar, womit dann die Chiplänge für jedes Bit 10 ps beträgt. Eine andere denkbare Phasenmodulation verwendet eine 2-Bit-Codierung mit vier Phasenzuständen, wie etwa 0°, 90°, 180° und 270°. Weitere Phasenmodulationen mit anderen Anzahlen von Phasenzuständen und anderen Phasenabständen sind vorstellbar.

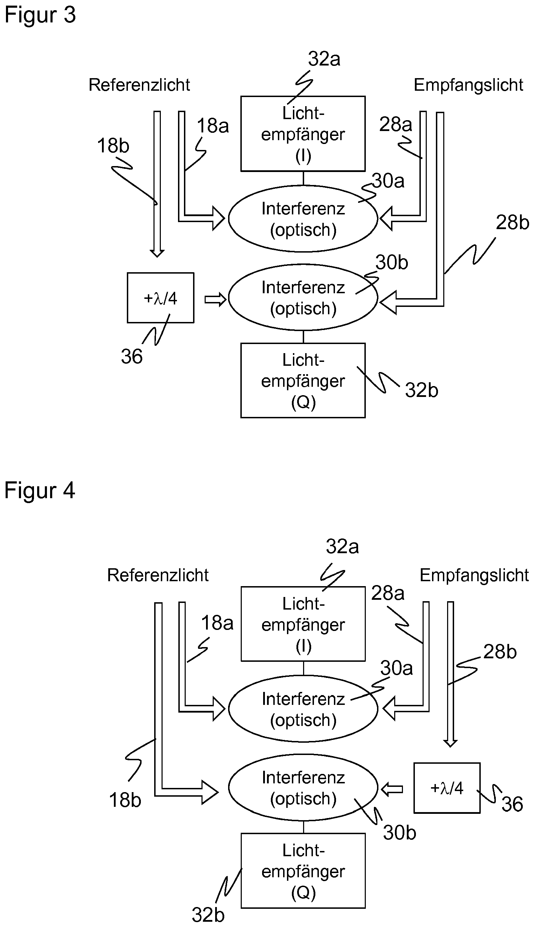

Figur 3 zeigt den empfangsseitigen Bereich der Interferenz und Detektion in der Vorrichtung 10 als Teilausschnitt. Während in Figur 1 und 2 nur ein Empfangskanal vorgesehen war, können mehrere gegeneinander phasenverschoben interferierende Empfangskanäle vorteilhaft sein, um den Phasencode auch bei ungünstigem Zeitversatz zwischen Referenzlicht 18 und Empfangslicht 28 zu erfassen. Figur 3 ist ein Beispiel für zwei Empfangskanäle. Das Empfangslicht 28a-b wird also aufgeteilt und interferiert an zwei Stellen 30a-b mit dem ebenfalls aufgeteilten Referenzlicht 18a-b. Für beide Interferenzsignale erfolgt dann eine Intensitätsdetektion in einem jeweiligen Lichtempfänger 32a-b. In einem Empfangskanal ist das Referenzlicht 18b mit Hilfe eines Phasenverzögerungselements 36 um ein Viertel seiner Wellenlänge verschoben. Analog zur elektrischen IQ-Demodulation mit Sinus- und Cosinussignalen eines Lokaloszillators bilden die beiden Empfangskanäle einen IQ-Demodulator. Figur 4 zeigt einen alternativen Aufbau, in dem das Phasenverzögerungselement 36 stattdessen das Empfangslicht 28b um 90° verschiebt. Prinzipiell könnten auch mehrere Lichtkomponenten 18a-b, 28a-b phasenverschoben sowie ein anderer Versatz als 90° eingestellt werden.

Die beiden in dem beschriebenen optischen I-Q-Demodulator erzeugten analogen elektrischen Signale werden dann beispielsweise in ein digitales, aber noch kontinuierliches Spannungssignal umgesetzt und daraufhin in der Steuer- und Auswertungseinheit 34 digital in eine Lichtfeldphase umgerechnet. Die resultierenden, immer noch kontinuierlichen Phasenwerte werden der am besten passenden Phasenbasis im Raster der sendeseitig verwendeten Phasencodierung zugeordnet und damit in jeder Chipdauer entschieden, welches Bit beziehungsweise welche Bits dadurch codiert sind. Bei einem binären Phasencode erfolgt eine 1-Bit-Decodierung mit Binarisierung bei einem 2-Bit-Phasencode wird ein 2-Bit-Codeelement rekonstruiert, oder die beiden Bits werden einzeln binarisiert. Anschließend findet die schon beschriebene Korrelation zwischen der bekannten Codefolge im Sendelicht 16 und der detektierten Codefolge statt, um die Lichtlaufzeit zu bestimmen.

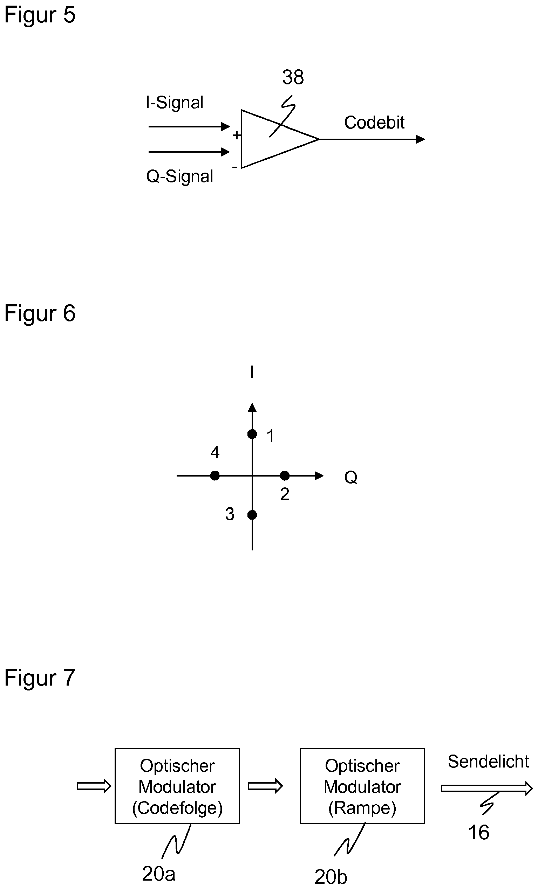

Figur 5 zeigt einen möglichen Vereinfachungsschritt zur Zusammenfassung der beiden Empfangskanäle aus Figur 3 oder 4. Hier werden schon analog mit Hilfe eines elektronischen Komparators oder Differenzverstärkers 38 die Analogsignale "I-Signal" und "Q-Signal" der beiden Empfangskanäle miteinander verglichen, und je nachdem welches das stärkere ist, wird eine Eins oder eine Null ausgegeben, woraus dann entsprechend die Codebits rekonstruiert werden.

Figur 6 illustriert nochmals die vier Phasenzustände bei einer 2-Bit-Codierung. Das kann vorteilhaft genutzt werden, um doch mit nur einem Empfangskanal auszukommen wie in Figur 1 und 2 und so den Aufbau der Vorrichtung 10 einfach zu halten. Eine besonders einfache Umsetzung einer 2-Bit-Codierung ist, den Code erst mit den Zuständen 0° und 180° und im direkten Anschluss mit den Zuständen 90° und 270° einzubringen. Komplexere 2-Bit-Codes sollen aber keineswegs ausgeschlossen werden.

Falls sich nun ein empfangenes Phasenmuster beispielsweise mit 0° und 180° aufgrund der aktuellen globalen Phase des Referenzlichts 18 nicht am Lichtempfänger 32 erkennen lässt, wird es dann in dem darauffolgenden Phasenmuster mit 90° und 270° gut sichtbar. Das lässt sich mit Figur 6 leicht verstehen. Sollten bei ungünstiger globaler Phasenlage die beiden Phasenzustände 2 und 4 identische Interferenzsignale erzeugen, so sind die Phasenzustände 1 und 3 optimal auseinanderzuhalten. So können beispielsweise zwei Codefolgen für die jeweiligen Zustände 0°, 180° einerseits und 90°, 270° andererseits gebildet und korreliert werden. In der Regel wird sogar in beiden Korrelationsverläufen ein Maximum lokalisierbar sein, und falls doch bei eine bestimmten globalen Phasenlage einer der Korrelationsverläufe kein erkennbares Maximum ausbildet, so ist es in dem anderen Korrelationsverlauf umso stärker.

Konzeptionell wird bei diesem Vorgehen die um 90° verdrehte Detektion eines zweiten Empfangskanals auf die sendeseitige Codierung übertragen, wo sie technisch einfacher umzusetzen ist, weil keine Hardware für den zweiten Empfangskanal erforderlich ist. Ein gewisser Nachteil ergibt sich, weil mehr Messdauer benötig wird: Bei ungünstigster Phasenlage ist nur die Hälfte der gesendeten Codes erfassbar und decodierbar.

Obwohl damit dargelegt ist, dass bei 2-Bit-Phasencodierung ein Empfangskanal genügt, kann es vorteilhaft sein, trotzdem zwei Empfangskanäle entsprechend Figur 3 und 4 oder sogar vier Empfangskanäle einzusetzen. Bei vier Empfangskanälen ist es vorteilhaft, analog zu Figur 3 und 4 durch jeweilige Phasenverzögerungselemente 36 für einen zusätzlichen Phasenversatz von 0°, 90°, 180° und 270° zu sorgen. Damit werden dann alle sendeseitigen Phasenzustände auseinandergehalten. Die jeweiligen Empfangssignale können einzeln binarisiert oder zunächst paarweise miteinander verglichen werden wir in Figur 5. Die entstehenden Codefolgen werden dann wieder digital mit der bekannten Codefolge des Sendelichts 16 korreliert.

Es sind auch andere Anzahlen von Phasenzuständen und Empfangskanälen denkbar, die nach den erläuterten Varianten ausgestaltet werden können. Hier ist jeweils der technische Aufwand gegen den Gewinn durch die Zusatzinformation abzuwägen, wobei auch die Lichtaufteilung auf mehr Empfangskanäle mit entsprechend schwächeren Signalen Berücksichtigung finden sollte.

Figur 7 zeigt einen Teil des Sendepfades für ein weiteres vorteilhaftes Modulationskonzept. Den bisher erläuterten Phasencodes wird dabei eine zusätzliche langsame Phasenmodulation überlagert. Eine Realisierungsmöglichkeit sind zwei aufeinanderfolgende optische Modulatoren 20a-b, insbesondere Phasenschieber. Sofern ein entsprechendes Bauteil zur Verfügung steht, ist auch die Umsetzung in einem einzigen Phasenschieber vorstellbar. In der Ausführungsform gemäß Figur 7 ist ein erster optischer Modulator 20a für die schnelle Phasenänderung mit einer Codefolge und ein zweiter optischer Modulator 20b für eine langsame Phasenmodulation zuständig, beispielsweise eine Phasenrampe, die sich langsam und vorzugsweise linear oder stufenweise von 0° bis 180°, bis 360° oder einen anderen Wert erhöht, sei es über die gesamte Dauer einer Abstandsmessung oder in mehreren Sägezahnperioden. Auch eine Rampe der Phase über einen Wertebereich weit größer als 360° hinaus ist denkbar. Dabei dauert eine Abstandsmessung beispielsweise 100 ns, bei statistischen Verfahren und hinreichend statischem Messbereich 26 auch länger bis in den Mikrosekundenbereich und darüber hinaus. Es sollte auf eine noch ausreichend schnelle Phasenrampe geachtet werden, um Verwechslungen mit einer Dopplerverschiebung durch gemessene Objekte mit entsprechender Radialgeschwindigkeit zu vermeiden. Die beiden optischen Modulatoren 20a-b können auch in umgekehrter Reihenfolge angeordnet sein.

Ein Vorteil einer Phasenrampe ist, dass damit eine feste, ungünstige globale Phasenlage vermieden wird. Außerdem sind die jeweiligen Messungen durch die zusätzliche Phase in gewisser Weise markiert, so dass damit der Eindeutigkeitsbereich zusätzlich erweiterbar ist. Die Phasenrampe ermöglicht aber auch eine besonders vorteilhafte Messung, die nun beschrieben werden soll.

Dazu wird eine Codefolge verwendet, die kürzer ist als die Messperiode für einen Abstandswert und die mehrfach hintereinander identisch ausgesandt wird. Für jeden Teilabschnitt der Dauer einer einzelnen Codefolge wird die Korrelation mit dem bekannten Sendecode berechnet. Es ergeben sich folglich so viele Korrelationsverläufe wie Wiederholungen. Aufgrund der überlagerten Phasenrampe ist jedoch Phasenversatz zwischen Referenzlicht 18 und Empfangslicht 28 in den Wiederholungen der Codefolge unterschiedlich, und dementsprechend resultieren unterschiedliche Korrelationsverläufe.

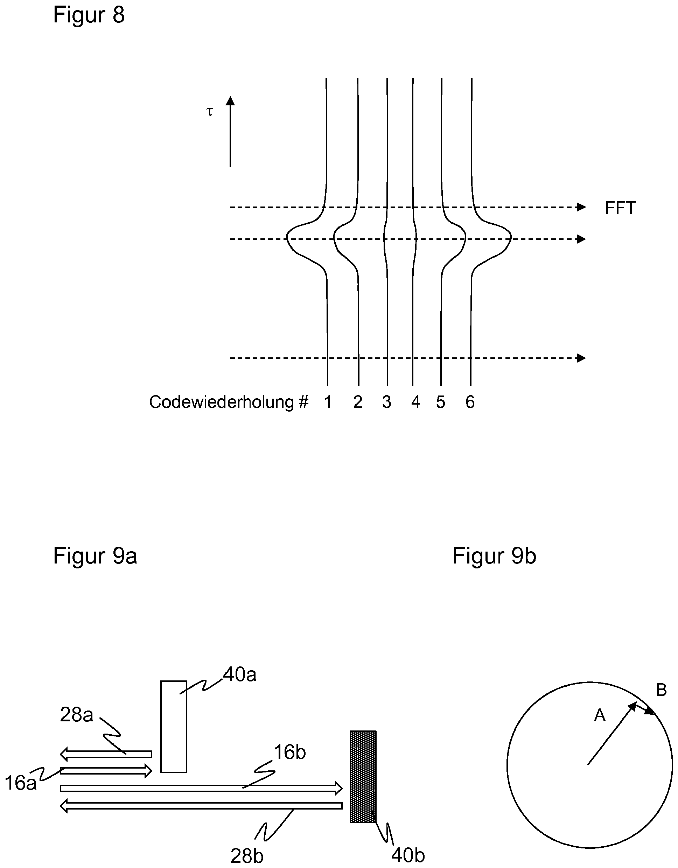

In Figur 8 ist dies beispielhaft für sechs wiederholt ausgesandte Codefolgen und damit Korrelationsverläufe illustriert. Die Korrelationsverläufe sind von unten nach oben orientiert und von links nach rechts der jeweiligen Wiederholung zugeordnet. Je nach globaler Phasenlage ist die Interferenz konstruktiv oder destruktiv, und das in unterschiedlichem Ausmaß. Wegen der Phasenrampe werden diese unterschiedlichen Situationen nacheinander herbeigeführt. Deshalb bildet sich im Beispiel der Figur 8 zunächst eine starke konstruktive, dann gar keine und schließlich eine stark destruktive Interferenz aus, die ein Korrelationsmaximum, einen annähernd flachen Korrelationsverlauf und schließlich ein Korrelationsminimum erzeugt. Die Amplitude des Korrelationsmaximums schwingt mit der Frequenz der Phasenrampe.

Damit ist anschaulich, dass das richtige Korrelationsmaximum als dasjenige aufgefunden werden kann, das mit der richtigen Frequenz schwingt. In einem realen Messsignal wird jedoch das Signal-Rauschverhältnis zu schlecht sein, um bereits in den einzelnen Korrelationsverläufen ein klares Korrelationsmaximum zu erkennen oder gar verlässlich in seiner Amplitude auszuwerten. Das lässt sich durch gemeinsame Fourieranalyse der Korrelationsverläufe überwinden. In Figur 8 sind dafür beispielhaft Horizontalen eingezeichnet, die also Messwerten im jeweils gleichen zeitlichen Abstand nach Beginn des Aussendens einer weiteren Wiederholung der Codefolge entsprechen. Bei der Horizontalen durch das Korrelationsmaximum wird sich in der Fouriertransformierten ein klarer Peak bei der Frequenz der Phasenrampe zeigen.

Es ist also möglich, durch eine Fourieranalyse, oder auch eine anders geartete Frequenz- oder Veränderungsanalyse, das Korrelationsmaximum mit der erforderlichen Signifikanz aufzufinden und so die Lichtlaufzeit zu bestimmen. Dabei wird die bekannte Phasenrampe als Filter verwendet. Die Fouriertransformation liefert überdies auch noch die zugehörige Phase, und das ist die genaue, in Bruchteilen der Lichtwellenlänge gemessene Phase der optionalen zusätzlichen kohärenten Phasendetektion zur Verfeinerung der Messung. Dieses Messverfahren ist also nicht nur eine weitere Alternative zur Bestimmung des Versatzes der Codefolgen in Referenzlicht 18 und Empfangslicht 28, sondern bietet auch die Möglichkeit, das verfeinernde kohärente Phasenverfahren zu ergänzen. Die Fourieranalyse muss sich auch nicht auf die zur Erläuterung in Figur 8 verwendeten Horizontalen beschränken, sondern kann das gesamte zweidimensionale Datenfeld der wiederholten Korrelationsverläufe berücksichtigen.

Bei der Umsetzung dieses Messverfahrens kann eine Korrelation schon berechnet werden, während die Messung mit einer weiteren Codewiederholung noch läuft. Die Berechnung ist damit vorteilhaft in kleinere Blöcke aufgeteilt, die in einer Art paralleler Pipeline abgearbeitet werden können. Mit der Phasenrampe genügt ein einziger Empfangskanal, aber eine Messung mit zwei Empfangskanälen I und Q oder eine sonstige der oben beschriebenen Modulationen und Demodulationen ist auch möglich.

In einer weiteren Ausführungsform ermöglicht die Phasenrampe eine Messung oder Kompensation einer eventuell auftretenden Dopplerverschiebung durch bewegte Objekte. Denn beispielsweise durch Fourieranalyse lässt sich die Sweep-Frequenz der Phasenrampe im Empfangslicht 28 messen. Bei einer Dopplerverschiebung weicht sie von der bekannten sendeseitigen Sweep-Frequenz ab. Das ist nun entweder eine Messinformation für die radiale Objektgeschwindigkeit, oder es wird kompensiert, beispielsweise indem das Messsignal analog oder digial in einer zweiten Datenauswertung mit der gemessenen Sweep-Frequenz heruntergemischt wird.

Mit den diversen Ausführungsformen für die Modulation mit einem Phasencode und dessen empfangsseitiger Rekonstruktion wird, wie zu Figur 1 erwähnt, noch nicht die höchste Messpräzision in Bruchteilen der Lichtwellenlänge erreicht. Dazu muss zusätzlich eine kohärente Phasenmessung erfolgen. Mit dem zu Figur 8 erläuterten Messverfahren wurde bereits eine Möglichkeit genannt, diese kohärente Phaseninformation zu gewinnen. Allgemein ist dafür erforderlich, nicht nur den Phasencode mit wenigen gültigen Phasenwerten zu rekonstruieren, sondern präzise die Phase während der Dauer eines Codebits zu messen.

Um den Phasenwert nicht nur mit sehr wenigen Bit aufzulösen, nämlich meist nur einem oder zwei Bit, sondern in vielen quasi-kontinuierlichen Werten, kann ein hochwertiger Mehrbit-AD-Wandler hinter dem Lichtempfänger 32 verwendet werden. Sollten mehrere Empfangskanäle zur Rekonstruktion der Codefolgen vorhanden sein, so genügt ein Mehrbit-AD-Wandler in einem dieser Empfangskanäle. Es ist denkbar, die Phasenmodulationsfrequenz etwas herabzusetzen, beispielsweise von 100 Ghz auf 10 GHz, da beispielsweise ein 8-Bit-Wandler mit dieser Frequenz technisch auch mit heutiger Technik ohne unzumutbaren Aufwand umsetzbar ist.

Die Phase wird pro Codebit und damit vielfach gemessen, so dass eine zusätzliche Mittelung vorstellbar ist. Dadurch lassen sich dann Schrittweiten von 1° oder weniger erreichen, somit eine Messgenauigkeit von wenigen oder wenigen zehn Nanometern. Die Messung mit Hilfe der Codefolge wird so weiter verfeinert, während die Codefolge umgekehrt den Eindeutigkeitsbereich der kohärenten oder interferometrischen Messung erheblich erweitert.

Die bisher beschriebenen Messungen setzen voraus, dass die Randbedingungen während einer Messperiode zumindest einigermaßen stationär sind. Das ist für Anwendungen wie den genannten Displacement-Sensor eine vernünftige Annahme. Bei mobilen Anwendungen oder in einem Laserscanner jedoch gibt es eine Dynamik. Dazu genügt schon die transversale Bewegung des Sendelichts 16 über eine Oberfläche, die auf den Skalen der Lichtwellenlänge praktisch immer rau ist und entsprechende Abstandsänderungen erzeugt. Die zu messende Phase ergibt sich aus der Überlagerung vieler elementar Wellen auf der rauen Oberfläche nach dem Huygensschen Prinzip. In einer realen Umgebung, die mit einem scannerartigen System erfasst wird, ändert sich also andauernd die absolute Phase.

Da demnach die Messstrecke auf der Größenordnung der Wellenlänge praktisch jederzeit variieren kann, wird eine Korrelation des Messergebnisses mit der ausgesandten Codefolge nicht unbedingt zu einem verwertbaren Messergebnis führen. Deshalb wird in einer weiteren vorteilhaften Ausführungsform ein differentielles Verfahren eingesetzt, das eine kohärente Detektion bei sich schnell ändernden Absolutphasen erlaubt. Denn Phasensprünge um 90° oder gar 180° sind trotz der aufgrund von dynamischen Umgebungen variierenden Phasen durchaus noch zu erkennen. Ein Phasensprung von 180° entspricht bei einer Lichtwellenlänge von 1.500 nm einer Wegstrecke von 750 nm. Bei einer Chipdauer je Bit von 10 ps ergibt sich eine Geschwindigkeit von 75.000 m/s, die kinematisch in der Umgebung nicht möglich ist. Phasensprünge durch die Codierung werden demnach nicht mit Umgebungseinflüssen verwechselt. Somit besteht die Möglichkeit, für eine Korrelation nur die Phasensprünge und damit Flanken des Codes heranzuziehen, und das kann unabhängig davon sein, ob es steigende oder fallende Flanken sind.

Nun ist die Detektion eines 180°-Phasensprungs aus dem Analogsignal des Lichtempfängers 32 nicht einfach möglich, denn das Analogsignal hängt auch noch von der Amplitude des Empfangslichts 28 ab. Daher ist ein spezieller Phasensprungdetektor vorteilhaft. Dazu werden wie schon zu Figur 3 und 4 beschrieben mehrere Empfangskanäle mit zusätzlichem gegenseitigem Phasenversatz des Referenzlichts 18 und/oder des Empfangslichts 28 eingesetzt. In einem Zahlenbeispiel werden vier Empfangskanäle mit Phasenversatz von 0°, 45°, 90° und 135° eingesetzt. Findet nun ein Phasensprung von 180° statt, wechselt die Interferenz in mindestens drei Empfangskanälen von konstruktiv zu destruktiv oder umgekehrt. Durch binäre Abtastung für die Empfangskanäle kann eine Logik durch einfachen Vergleich zwischen dem aktuellen und dem letzten Zustand des jeweiligen Empfangskanals den Phasensprung detektieren. Dies ist unabhängig von der Amplitude des Empfangslichts 28, und die absolute Phasenlage spielt dabei keine Rolle. Die Korrelation anhand der Phasensprünge und das übrige Messverfahren laufen dann analog ab wie bisher beschrieben. Durch Beobachten der Zustandswechsel der einzelnen Empfangskanäle kann sogar noch auf die Oberfläche des abgetasteten Objekts geschlossen werden.

Figur 9 illustriert eine problematische Messsituation, wenn das Sendelicht 16a-b mehrere Messobjekte 40a-b trifft. Das wird als Kantentreffer oder Doppeltreffer bezeichnet, und analog werden mehrere teiltransparente hintereinanderliegende Messobjekte 40a-b getroffen. Bei einem kurzreichweitigen Displacement-Sensor kommt dies möglicherweise gar nicht vor, in anderen Anwendungen ist es jedoch nicht immer zu vermeiden. Wie in Figur 9b illustriert, überlagern sich dann Phasenanteile des Empfangslichts 28a-b der beiden Messobjekte 40a-b, und es kommt zu Messfehlern beziehungsweise übersehenen fernen Messobjekten 40b.

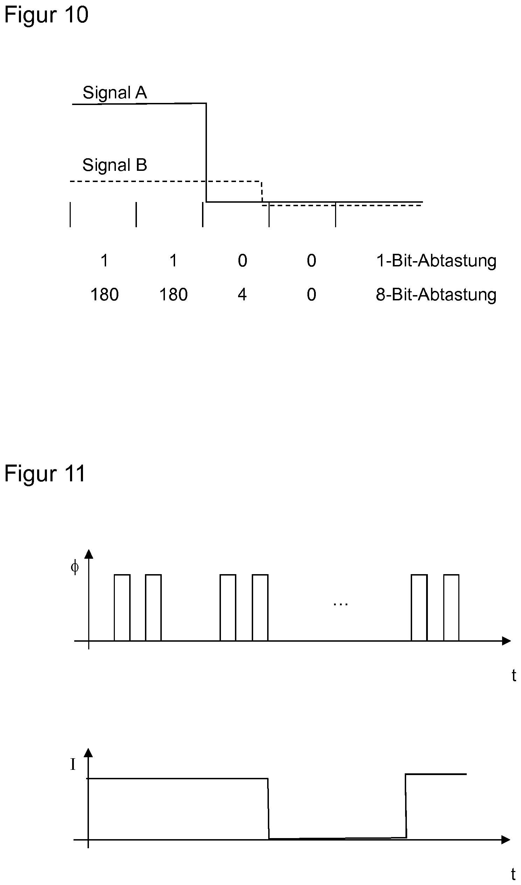

Figur 10 zeigt beispielhaft ein schon recht früh in der Verarbeitungskette mit nur einem Bit binarisiertes Detektionssignal entsprechend zahlreichen oben beschriebene Demodulationsschemata. Damit wird die Situation der Figur 9a-b nicht aufzulösen sein. Steht aber ein feines aufgelöstes Detektionssignal zur Verfügung, das beispielsweise für die feine kohärente Phasenmessung gewonnen wird, dann lassen sich im Korrelationssignal auch zwei oder noch mehr Messobjekte 40a-b unterscheiden, da sie zwei oder mehr unterscheidbare Peaks in der Korrelation erzeugen.

Figur 11 illustriert ein alternatives Vorgehen, bei dem eine zusätzliche Intensitätsmodulation des Sendelichts 16 eingeführt wird, eine Art Burst-Betrieb. Solange das Sendelicht 16 in den Messbereich 26 ausgesandt wird, erfolgt die Messung wie beschrieben. In den Zeiten ohne Sendelicht 16 wird das Empfangslicht 28 weiter gemessen. Bereits der von dem fernen Messobjekt 40b zurückkehrende Lichtburst von vor der Sendepause ermöglicht eine grobe Abstandsmessung ähnlich einem Pulsverfahren. Vor allem geht es aber darum, dem schwächeren Empfangslicht 28b von dem fernen Messobjekt 40b ein Zeitfenster zu geben, in dem es ohne Überlagerung durch das starke Empfangslicht 28a detektiert und ausgewertet werden kann. Technisch lässt sich das Sendelicht 16 vorübergehend blockieren, indem ein Lichtschalter, insbesondere ein Mach-Zehnder-Interferometer im Wellenleiter, oder ein Lichtverstärker (SOA, semiconductor optical amplifier) beispielsweise vor oder nach dem optischen Modulator 20 angeordnet wird.

Es sind zahlreiche weitere Variationen und Weiterbildungen der beschriebenen Messverfahren möglich. In einer derartigen Ausführungsform werden zwei oder mehr Laser unterschiedlicher Wellenlänge eingesetzt und vorzugsweise vor Austritt aus der Vorrichtung 10 auf einen gemeinsamen Wellenleiter übertragen. Dadurch werden zwei Messkanäle mit unterschiedlichen Wellenlängen aufgebaut, die trotzdem jeweils dieselbe Messstrecke nutzen. Da es sich um transversal monomodiges Licht handelt, kann auf diese Weise ein komplett redundanter Messwert erzeugt werden.

Es wurden oben schon einige Beispiele angegeben, in denen sich nicht nur ein einziger Code über die gesamte Dauer einer Abstandsmessung erstreckt, sondern mehrere Codes nacheinander ausgesandt werden, um daraus einen gemeinsamen Abstandswert zu bestimmen. Diese Codes können untereinander identisch sein oder nicht. Mit identischen Codes werden vor allem Messwiederholungen umgesetzt. Verschiedene Codes können sich eine größere Reichweite aufteilen und den Eindeutigkeitsbereich nochmals erweitern. Solche Codes sind vorzugsweise nicht einfach verschieden voneinander, sondern sorgfältig im Hinblick auf das Korrelationsverhalten konstruiert, beispielsweise orthogonal zueinander. Ein Wechsel der Codes erhöht auch die Störfestigkeit bei mehreren Messkanälen oder gegenüber Fremdsendern, wie zueinander benachbart eingesetzten baugleichen weiteren Vorrichtungen 10.

Ein Vorteil mehrerer kürzerer Codes ist der geringere Rechenaufwand bei der Korrelation. Deren Berechnungslaufzeit wächst quadratisch mit der Codelänge n. Dagegen benötigt die Auswertung von m Codewiederholungen nur den Aufwand entsprechend m* (n/m)² < n².

In einer weiteren Ausführungsform wird die Sendemodulation beziehungsweise deren Taktgeber leicht gegenüber der empfangsseitigen Abtastung beziehungsweise deren Taktgeber variiert oder verjittert. Das führt dazu, dass die Peaks in der Korrelation etwas breiter werden und ihre Position und damit der Abstandswert genauer bestimmt werden kann, nämlich subpixelgenau. Der Schwerpunkt eines idealen Deltapeaks könnte nur mit der Genauigkeit der Abtastung erfasst werden.

Die Vorrichtung 10 lässt sich erweitern, um auch radiale Objektgeschwindigkeiten anhand der Dopplerverschiebung zu ermitteln. Dazu wird die in mehreren Teilabschnitten der Codefolge interferometrisch gemessene Phase betrachtet. Wenn darin eine Phasendrift erkennbar ist, dann lässt sich dies als Dopplerverschiebung interpretieren und einer Objektgeschwindigkeit zuordnen. In einem Zahlenbeispiel werden bei einer Lichtwellenlänge von 1.550 nm und einer Phasenmodulationsfrequenz für die Codefolge von 100 GHz für ein unbewegtes Objekt in einer 100 ns andauernden Messperiode 10.000 Modulationszyklen gemessen. Bei Objekten mit einer Radialgeschwindigkeit von 1 m/s verändert sich die Anzahl der Modulationszyklen in der Messperiode auf 10.000,065. Dies entspricht einer Änderung des Phasenwinkels um 23°und ist damit bereits gut detektierbar.

Bisher wurde die Polarisation des Lichtes noch nicht beachtet. Der Polarisationszustand des Referenzlichts 18 bestimmt die für die gesamte Messung verwendete Polarisation. Empfangslicht 28 der dazu senkrechten Polarisation verursacht keine Modulationstiefe am Lichtempfänger 32. Nun könnten Messobjekte mit ungünstigen Oberflächeneigenschaften dazu führen, dass das Empfangslicht 28 permanent senkrecht zum Referenzlicht 18 polarisiert ist. Dagegen können vorteilhafte weitere Maßnahmen getroffen werden.

Eine Möglichkeit besteht darin, im optischen Pfad des Referenzlichts 18 ein schaltbares Polarisationsbauteil anzuordnen, wie eine schaltbare Halb- oder Viertelwellenplatte. Für einige Messungen oder Abschnitte einer Messung, die insbesondere in zwei Hälften aufgeteilt ist, wird das Polarisationsbauteil umgeschaltet, so dass jeweils eine andere Empfangspolarisation zur Messung beiträgt. Auch der komplette Empfangspfad kann doppelt ausgeführt werden, samt seiner jeweiligen Empfangskanäle, mit einer Kopie in einer denkbaren Empfangspolarisation und einer zweiten Kopie in dazu senkrechter Empfangspolarisation, wobei hierzu jetzt Referenzlicht 18 mit entsprechend verdrehter Polarisation zum Einsatz kommt. Bei der Verwendung einer zu Figur 7 vorgestellten Phasenrampe kann der eine Empfangskanal mit Referenzlicht 18 eine Polarisationsrichtung und der andere Empfangskanal mit Referenzlicht 18 der dazu senkrechten Polarisationsrichtung betrieben werden. Durch die Phasenrampe werden die Kombinationen von Empfangspolarisationszustand und Empfangsphasenlage durchgespielt. Als weiterer Vorteil kann der Polarisationszustand des Empfangslichtes 28 für jeden Messpunkt als zusätzliche Eigenschaft des Messobjekts bestimmt werden.

Zur praktischen Unterstützung kann die Vorrichtung 10 zusätzlich zum Laser 12, der wie in der Telekommunikation üblich meist im Infrarotbereich arbeitet, noch einen sichtbaren Laser oder eine sonstige sichtbare Lichtquelle aufweisen. So kann der Benutzer der Vorrichtung 10 einfach und genau erkennen, an welcher Stelle er messen wird. Sollte ein Laser 12 im sichtbaren Bereich eingesetzt sein, übernimmt dieser selbst die Zielfunktion.

Abschließend sollen noch Zahlenbeispiele für die Energiebilanz des Inteferenzsignals und damit die in einer Vorrichtung 10 erreichbaren Messgenauigkeiten gegeben werden. Als Maß dafür dient die Standardabweichung des statistischen Rauschens des Abstandsmesswerts. Ausgangsgrößen seien eine Lichtwellenlänge von 1.550 nm, eine Frequenz von 100 Ghz der Phasenmodulation, eine typische Kohärenzlänge von mindestens 200 mm entsprechend einer spektralen Breite von 0,01 nm, eine gemeinsame Sende- und Empfangsoptik 24 mit effektiver Apertur des Durchmessers 2mm, ein Divergenzwinkel der gesendeten und empfangenen Lichtmode von 1mrad, eine Messperiode von 100 ns mit folglich 10.000 Modulationsperioden und ein Messobjekt mit 10% Remission im maximalen Messabstand von 100 mm.

Für das Korrelationsverfahren allein, bei dem also die Codefolge rekonstruiert und daraus der Zeitversatz zwischen Referenzlicht 18 und Empfangslicht 28 bestimmt wird, noch ohne die Phase auf interferometrischer Skala fein zu messen, ergibt sich bereits bei einer optischen Leistung von 1 mW im Dauerstrichbetrieb ein erreichbares optisches Signal-Rausch-Verhältnis von etwa 25. Das lässt sich auch als das Verhältnis der signaltragenden Photonen zum Schrotrauschen der Intensität des Referenzlichts 18 beschreiben. Daraus wird das Abstandsrauschen auf σ=10 µm abgeschätzt. Dieser Wert ist im Vergleich zu gängigen entfernungsmessenden optoelektronischen Sensoren bereits sehr gut.

Wird bei ansonsten gleichen Ausgangswerten eine optische Leistung von nun 100 mW angenommen, so steigert sich der Wert für das Signal-Rausch-Verhältnis auf 750. Damit wird das geschätzte Abstandsrauschen mit σ=0,5 µm kleiner als die halbe Lichtwellenlänge, und so ist die Voraussetzung gegeben, den Eindeutigkeitsbereich für eine präzise kohärente Phasenmessung währende eines Codebits praktisch beliebig durch geeignete Codefolgen zu erweitern. So wird dann sogar eine Messauflösung in Bruchteilen einer Lichtwellenlänge erreicht, also unter 100 nm oder sogar 10 nm.

## Patentansprüche

1. Optoelektronische Vorrichtung (10) zum Messen von Abständen zu einem Objekt in einem Überwachungsbereich (26), mit einem Lichtsender (12) zum Aussenden von kohärentem Sendelicht (16) in den Überwachungsbereich (26), mit einem Lichtempfänger (32) zum Empfangen von Empfangslicht (28) aus dem Überwachungsbereich (26) und mit einer Steuer- und Auswertungseinheit (34), die dafür ausgebildet ist, eine Codefolge als Phasenmodulation der Lichtwelle selbst auf das Sendelicht (16) aufzumodulieren und die Codefolge im Empfangslicht (28) mit der bekannten Codefolge im Sendelicht (16) als Referenz zu vergleichen, um die Lichtlaufzeit und daraus einen Abstand zu bestimmen, wobei ein Teil des Sendelichts (16) als Referenzlicht (18) zum Lichtempfänger (32) geführt ist, wo es mit dem Empfangslicht (28) interferiert, und wobei der Lichtempfänger (32) das entstehende Interferenzsignal detektiert,
**dadurch gekennzeichnet,**
**dass** die Steuer- und Auswertungseinheit (34) weiterhin dafür ausgebildet ist, dem Sendelicht (16) zusätzlich zu der Codefolge eine Phasenrampe aufzumodulieren.

2. Optoelektronische Vorrichtung (10) nach Anspruch 1,
wobei der Lichtsender (12) eine nicht abstimmbare Laserlichtquelle für Sendelicht (16) einer Wellenlänge aufweist.

3. Optoelektronische Vorrichtung (10) nach Anspruch 1 oder 2,
wobei die Steuer- und Auswertungseinheit (34) dafür ausgebildet ist, Codebits der Codefolge, insbesondere einer Pseudozufallscodefolge, mit einer Frequenz von mindestens 10 GHz auf das Sendelicht (16) aufzumodulieren.

4. Optoelektronische Vorrichtung (10) nach einem der vorhergehenden Ansprüche,
wobei die Steuer- und Auswertungseinheit (34) dafür ausgebildet ist, für eine Verfeinerung der Bestimmung der Lichtlaufzeit die Phasenverschiebung der Lichtwelle zwischen Sendelicht (16) und Empfangslicht (28) zu bestimmen, wobei insbesondere dem Lichtempfänger (32) ein Mehrbit-AD-Wandler mit einer Abtastfrequenz von mindestens 10 GHz nachgeordnet ist, um das Interferenzsignal hochaufgelöst abzutasten.

5. Optoelektronische Vorrichtung (10) nach einem der vorhergehenden Ansprüche,
wobei die Steuer- und Auswertungseinheit (34) dafür ausgebildet ist, die Codefolge durch zwei oder mehr Phasenzustände, insbesondere vier Phasenzustände auf das Sendelicht (16) aufzumodulieren.

6. Optoelektronische Vorrichtung (10) nach einem der vorhergehenden Ansprüche,
wobei der Lichtempfänger (32) mehrere Lichtempfangselemente (32a-b) aufweist, an denen jeweils ein Interferenzsignal aus Empfangslicht (28) und Referenzlicht (18) erzeugt und detektiert wird, und wobei ein Phasenverschiebeelement (36) im Strahlengang von Empfangslicht (28) und/oder Referenzlicht (18) mindestens eines Lichtempfangselements (32a-b) angeordnet ist.

7. Optoelektronische Vorrichtung (10) nach einem Ansprüche 1 bis 5,
wobei der Lichtempfänger (32) nur ein Lichtempfangselement aufweist.

8. Optoelektronische Vorrichtung (10) nach einem der vorhergehenden Ansprüche,
wobei dem Lichtempfänger (32) ein Binarisierer nachgeordnet ist, um das Interferenzsignal oder eine Kombination von Interferenzsignalen in eine Bitfolge für den Vergleich mit der Codefolge zu wandeln.

9. Optoelektronische Vorrichtung (10) nach einem der vorhergehenden Ansprüche,
wobei die Steuer- und Auswertungseinheit (34) dafür ausgebildet ist, innerhalb einer Messung eine Codefolge wiederholt aufzumodulieren.

10. Optoelektronische Vorrichtung (10) nach Anspruch 9,
wobei die Steuer- und Auswertungseinheit (34) dafür ausgebildet ist, aus den jeweils wiederholt ausgesandten und wieder empfangenen Codefolgen mehrere Korrelationssignale zu bestimmen, darin mittels Fourieranalyse anhand der Frequenzeigenschaften der Phasenrampe ein Korrelationsmaximum aufzufinden und dessen zeitliche Lage innerhalb des Korrelationssignals sowie die zugehörige Phase zu bestimmen.

11. Optoelektronische Vorrichtung (10) nach einem der vorhergehenden Ansprüche,
wobei die Steuer- und Auswertungseinheit (34) dafür ausgebildet ist, das aus dem Interferenzsignal erzeugte Empfangssignal differentiell auf Phasensprünge auszuwerten.

12. Optoelektronische Vorrichtung (10) nach Anspruch 11,
wobei der Lichtempfänger (32) mehrere Lichtempfangselemente (32a-b) aufweist, an denen jeweils ein Interferenzsignal aus Empfangslicht (28) und Referenzlicht (18) erzeugt und detektiert wird, wobei ein Phasenverschiebeelement (36) im Strahlengang von Empfangslicht (28) und/oder Referenzlicht (18) mindestens eines Lichtempfangselements (32a-b) angeordnet ist und wobei die Steuer- und Auswertungseinheit (34) dafür ausgebildet ist, einen Phasensprung dann zu erkennen, wenn mehrere Lichtempfangselemente (32a-b) zugleich einen Sprung in der Intensität ihres Interferenzsignals erfassen.

13. Optoelektronische Vorrichtung (10) nach einem der vorhergehenden Ansprüche,
wobei im Strahlengang des Referenzlichts (18) und/oder Empfangslichts (28) ein insbesondere schaltbares polarisationsoptisches Bauelement angeordnet ist und/oder wobei die Steuer- und Auswertungseinheit (34) dafür ausgebildet ist, zeitweise kein Sendelicht (16) in den Überwachungsbereich (26) auszusenden und nur das Interferenzsignal auszuwerten.

14. Verfahren zum Messen von Abständen zu einem Objekt in einem Überwachungsbereich (26), bei dem kohärentes Sendelicht (16) in den Überwachungsbereich (26) ausgesandt und Empfangslicht (28) aus dem Überwachungsbereich (26) empfangen wird, wobei eine Codefolge als Phasenmodulation der Lichtwelle selbst auf das Sendelicht (16) aufmoduliert und die Codefolge im Empfangslicht (28) mit der bekannten Codefolge im Sendelicht (16) als Referenz verglichen wird, um die Lichtlaufzeit und daraus einen Abstand zu bestimmen, wobei ein Teil des Sendelichts (16) als Referenzlicht (18) ohne Lichtweg durch den Überwachungsbereich (26) mit dem Empfangslicht (28) zum Interferieren gebracht und das entstehende Interferenzsignal detektiert und ausgewertet wird,
**dadurch gekennzeichnet,**
**dass** dem Sendelicht (16) zusätzlich zu der Codefolge eine Phasenrampe aufmoduliert wird.

## Claims

1. An optoelectronic device (10) for measuring distances to an object in a monitored area (26), the device (10) comprising a light transmitter (12) for transmitting coherent transmitted light (16) into the monitored area (26), a light receiver (32) for receiving received light (28) from the monitored area (26), and a control and evaluation unit (34) configured to modulate a code sequence onto the transmitted light (16) as a phase modulation of the light wave itself and to compare the code sequence in the received light (28) with the known code sequence in the transmitted light (16) as a reference, in order to determine the light time of flight and, from that, a distance, wherein a portion of the transmitted light (16) is guided as reference light (18) to the light receiver (32) where it interferes with the received light (28), and wherein the light receiver (32) detects the resulting interference signal,
**characterized in that** the control and evaluation unit (34) is further configured to modulate a phase ramp onto the transmitted light (16) in addition to the code sequence.

2. The optoelectronic device (10) according to claim 1,
wherein the light transmitter (12) comprises a non-tunable laser light source for transmitting light (16) of one wavelength.

3. The optoelectronic device (10) according to claim 1 or 2,
wherein the control and evaluation unit (34) is configured to modulate code bits of the code sequence, in particular a pseudo-random code sequence, onto the transmitted light (16) at a frequency of at least 10 GHz.

4. The optoelectronic device (10) according to any of the preceding claims,
wherein the control and evaluation unit (34) is configured to determine the phase shift of the light wave between transmitted light (16) and received light (28) in order to refine the determination of the light time of flight, wherein in particular a multi-bit AD converter with a sampling frequency of at least 10 GHz is arranged downstream of the light receiver (32) in order to sample the interference signal with high resolution.

5. The optoelectronic device (10) according to any of the preceding claims,
wherein the control and evaluation unit (34) is configured to modulate the code sequence onto the transmitted light (16) as two or more phase states, in particular four phase states.

6. The optoelectronic device (10) according to any of the preceding claims,
wherein the light receiver (32) comprises a plurality of light receiving elements (32a-b), on each of which an interference signal is generated and detected from received light (28) and reference light (18), and wherein a phase shift element (36) is arranged in the beam path of received light (28) and/or reference light (18) of at least one light receiving element (32a-b).

7. The optoelectronic device (10) according to claims 1 to 5,
wherein the light receiver (32) has only one light receiving element.

8. The optoelectronic device (10) according to any of the preceding claims,
wherein a binarizer is arranged downstream of the light receiver (32) for converting the interference signal or a combination of interference signals into a bit sequence for comparison with the code sequence.

9. The optoelectronic device (10) according to any of the preceding claims,
wherein the control and evaluation unit (34) is configured to repeatedly modulate a code sequence within a measurement.

10. The optoelectronic device (10) according to claim 9,
wherein the control and evaluation unit (34) is configured to determine a plurality of correlation signals from each of the code sequences that are repeatedly transmitted and received, to find a correlation maximum therein by means of Fourier analysis using the frequency characteristics of the phase ramp, and to determine its time position within the correlation signal and the associated phase.

11. The optoelectronic device (10) according to any of the preceding claims,
wherein the control and evaluation unit (34) is configured to differentially evaluate the received signal generated from the interference signal for phase jumps.

12. The optoelectronic device (10) according to claim 11,
wherein the light receiver (32) comprises a plurality of light receiving elements (32a-b) on each of which an interference signal is generated and detected from received light (28) and reference light (18), wherein a phase shift element (36) is arranged in the beam path of received light (28) and/or reference light (18) of at least one light receiving element (32a-b) and wherein the control and evaluation unit (34) is configured to detect a phase jump when several light receiving elements (32a-b) simultaneously detect a jump in the intensity of their interference signal.

13. The optoelectronic device (10) according to any of the preceding claims,
wherein a polarization-optical component, in particular a switchable polarization-optical component, is arranged in the beam path of the reference light (18) and/or received light (28), and/or wherein the control and evaluation unit (34) is configured to temporarily transmit no transmitted light (16) into the monitoring area (26) and to evaluate only the interference signal.

14. A method for measuring distances to an object in a monitored area (26), wherein coherent transmitted light (16) is transmitted into the monitored area (26) and received light (28) from the monitored area (26) is received, wherein a code sequence is modulated onto the transmitted light (16) as phase modulation of the light wave itself and the code sequence in the received light (28) is compared with the known code sequence in the transmitted light (16) as a reference, in order to determine the light time of flight and, from that, a distance, wherein a portion of the transmitted light (16) is caused to interfere with the received light (28) as reference light (18) without a light path through the monitoring area (26), and the resulting interference signal is detected and evaluated,
**characterized in that** a phase ramp is modulated onto the transmitted light (16) in addition to the code sequence.

## Revendications

1. Dispositif optoélectronique (10) pour mesurer des distances par rapport à un objet dans une zone à surveiller (26), comportant un émetteur de lumière (12) pour émettre une lumière d'émission cohérente (16) dans la zone à surveiller (26), un récepteur de lumière (32) pour recevoir une lumière de réception (28) en provenance de la zone à surveiller (26), et une unité de commande et d'évaluation (34) qui est réalisée pour moduler sur la lumière d'émission (16) une séquence de code en tant que modulation de phase de l'onde lumineuse elle-même et pour comparer la séquence de code dans la lumière de réception (28) à la séquence de code connue dans la lumière d'émission (16) en tant que référence, afin de déterminer le temps de parcours de lumière et, à partir de celui-ci, une distance, dans lequel une partie de la lumière d'émission (16) est guidée en tant que lumière de référence (18) vers le récepteur de lumière (32), où elle interfère avec la lumière de réception (28), et le récepteur de lumière (32) détecte le signal d'interférence qui en résulte,
**caractérisé en ce que**
l'unité de commande et d'évaluation (34) est en outre réalisée pour moduler sur la lumière d'émission (16), en supplément à la séquence de code, une rampe de phase.

2. Dispositif optoélectronique (10) selon la revendication 1,
dans lequel l'émetteur de lumière (12) comprend une source de lumière laser non accordable pour la lumière d'émission (16) d'une longueur d'onde.

3. Dispositif optoélectronique (10) selon la revendication 1 ou 2,
dans lequel l'unité de commande et d'évaluation (34) est réalisée pour moduler sur la lumière d'émission (16) des bits de code de la séquence de code, en particulier d'une séquence de code pseudo-aléatoire, avec une fréquence d'au moins 10 GHz.

4. Dispositif optoélectronique (10) selon l'une des revendications précédentes,
dans lequel l'unité de commande et d'évaluation (34) est réalisée pour déterminer le déphasage de l'onde lumineuse entre la lumière d'émission (16) et la lumière de réception (28) pour affiner la détermination du temps de parcours de lumière, et en particulier, un convertisseur analogique/numérique multibits ayant une fréquence d'échantillonnage d'au moins 10 GHz est disposé en aval du récepteur de lumière (32), afin d'échantillonner le signal d'interférence avec une haute résolution.

5. Dispositif optoélectronique (10) selon l'une des revendications précédentes,
dans lequel l'unité de commande et d'évaluation (34) est réalisée pour moduler sur la lumière d'émission (16) la séquence de code par deux ou plusieurs états de phase, en particulier par quatre états de phase.

6. Dispositif optoélectronique (10) selon l'une des revendications précédentes,
dans lequel le récepteur de lumière (32) comprend plusieurs éléments de réception de lumière (32a-b), sur chacun desquels un signal d'interférence de la lumière de réception (28) et de la lumière de référence (18) est généré et détecté, et un élément de déphasage (36) est disposé dans le chemin optique de la lumière de réception (28) et/ou de la lumière de référence (18) d'au moins un élément de réception de lumière (32a-b).

7. Dispositif optoélectronique (10) selon l'une des revendications 1 à 5,
dans lequel le récepteur de lumière (32) ne comprend qu'un élément de réception de lumière.

8. Dispositif optoélectronique (10) selon l'une des revendications précédentes,
dans lequel un binariseur est disposé en aval du récepteur de lumière (32) pour convertir le signal d'interférence ou une combinaison de signaux d'interférence en une séquence de bits pour la comparaison avec la séquence de code.

9. Dispositif optoélectronique (10) selon l'une des revendications précédentes,
dans lequel l'unité de commande et d'évaluation (34) est réalisée pour moduler de manière répétée une séquence de code au sein d'une mesure.

10. Dispositif optoélectronique (10) selon la revendication 9,
dans lequel l'unité de commande et d'évaluation (34) est réalisée pour déterminer plusieurs signaux de corrélation à partir des séquences de code respectives émises et reçues de manière répétée, pour y localiser un maximum de corrélation au moyen d'une analyse de Fourier sur la base des caractéristiques de fréquence de la rampe de phase, et pour déterminer sa position temporelle à l'intérieur du signal de corrélation ainsi que la phase associée.

11. Dispositif optoélectronique (10) selon l'une des revendications précédentes,
dans lequel l'unité de commande et d'évaluation (34) est réalisée pour évaluer le signal de réception, généré à partir du signal d'interférence, de manière différentielle quant à des sauts de phase.

12. Dispositif optoélectronique (10) selon la revendication 11,
dans lequel le récepteur de lumière (32) comprend une pluralité d'éléments de réception de lumière (32a-b) au niveau de chacun desquels un signal d'interférence de la lumière de réception (28) et de la lumière de référence (18) est généré et détecté, un élément de déphasage (36) est disposé dans le chemin optique de la lumière de réception (28) et/ou de la lumière de référence (18) d'au moins un élément de réception de lumière (32a-b), et l'unité de commande et d'évaluation (34) est réalisée pour reconnaître un saut de phase lorsque plusieurs éléments de réception de lumière (32a-b) détectent simultanément un saut de l'intensité de leur signal d'interférence.

13. Dispositif optoélectronique (10) selon l'une des revendications précédentes,
dans lequel un composant de polarisation optique, en particulier commutable, est disposé dans le chemin optique de la lumière de référence (18) et/ou de la lumière de réception (28), et/ou l'unité de commande et d'évaluation (34) est réalisée pour n'émettre temporairement aucune lumière d'émission (16) dans la zone à surveiller (26) et pour évaluer uniquement le signal d'interférence.

14. Procédé pour mesurer des distances par rapport à un objet dans une zone à surveiller (26), dans lequel une lumière d'émission (16) cohérente est émise dans la zone à surveiller (26), et une lumière de réception (28) est reçue de la zone à surveiller (26), une séquence de code est modulée sur la lumière d'émission (16) en tant que modulation de phase de l'onde lumineuse elle-même, et la séquence de code dans la lumière de réception (28) est comparée à la séquence de code connue dans la lumière d'émission (16) en tant que référence, afin de déterminer le temps de parcours de lumière et, à partir de celui-ci, une distance, une partie de la lumière d'émission (16) en tant que lumière de référence (18) est amenée à interférer avec la lumière de réception (28) sans trajet lumineux à travers la zone à surveiller (26), et le signal d'interférence qui en résulte est détecté et évalué,
**caractérisé en ce que**
une rampe de phase est modulée sur la lumière d'émission (16), en supplément à la séquence de code.
